# FASCICULE DE BREVET EUROPEEN

(11) **EP 3 303 895 B1**
(45) Date de publication et mention de la délivrance du brevet: **20.11.2024**
(21) Numéro de dépôt: 16703460.2
(22) Date de dépôt: 01.02.2016
(51) Int. Cl.: F16L 53/00, B08B 9/027, B08B 17/04

(54) **COUVERTURE AMOVIBLE DESTINÉE À ÊTRE DISPOSÉE EN REGARD D'UNE CONDUITE DE TRANSPORT DE FLUIDE IMMERGÉE DANS UNE ÉTENDUE D'EAU, ENSEMBLE D'INTERVENTION ET PROCÉDÉ ASSOCIÉS**
ABNEHMBARE ABDECKUNG ZUR ANORDNUNG GEGENÜBER EINES IN EINEM GEWÄSSER UNTERGETAUCHTEN FLÜSSIGKEITSTRANSPORTROHRS, ZUGEHÖRIGE INTERVENTIONSANORDNUNG UND VERFAHREN
REMOVABLE COVER INTENDED FOR BEING ARRANGED OPPOSITE A FLUID-TRANSPORT PIPE SUBMERGED IN A BODY OF WATER, ASSOCIATED INTERVENTION ASSEMBLY AND METHOD

(30) Priorité: 27.05.2015 FR 1554771
(43) Date de publication de la demande: 11.04.2018
(73) Titulaire: TechnipFMC Subsea France, 92400 Courbevoie (FR)
(72) Inventeur: ESPINASSE, Philippe, 76420 Bihorel (FR); PARENTEAU, Thomas, 75011 Paris (FR); ROUTEAU, Sylvain, 92210 Saint Cloud (FR); MARRET, Antoine, 75012 Paris (FR)
(74) Mandataire: Lavoix
(86) Numéro de dépôt international: PCT/EP2016/052057
(87) Numéro de publication internationale: WO 2016/188640

(56) Documents cités:
- WO-A1-2010/135772
- WO-A1-90/01584
- FR-A1- 2 788 831

## Description

La présente invention concerne une couverture amovible destinée à être disposée en regard d'une conduite de transport de fluide immergée dans une étendue d'eau, selon le préambule de la revendication 1.

La conduite de transport de fluide est par exemple disposée au fond d'une étendue d'eau, pour transporter un fluide sur le fond de l'étendue d'eau, avant sa remontée vers la surface.

La conduite est avantageusement une conduite rigide formée d'au moins un tube métallique. En variante, la conduite est une conduite flexible. Elle est par exemple posée sur le fond de l'étendue d'eau ou/et est enterrée dans le fond de l'étendue d'eau à faible profondeur.

Le fluide transporté par la conduite est notamment un fluide pétrolier contenant des hydrocarbures, tel que du pétrole ou du gaz naturel.

Lorsque ce type de fluide circule au fond d'une étendue d'eau, à des grandes profondeurs, des composés présents dans le fluide, tels que des hydrates ou des paraffines sont susceptibles de se solidifier et de former des accumulations de solide telles que des restrictions et dans certains cas critiques, des bouchons.

En variante, les hydrates et les paraffines se forment lors d'un arrêt de la production dû à une opération de maintenance ou à un dysfonctionnement.

Les accumulations de solide ainsi formées perturbent la circulation du fluide et l'exploitation de l'installation, pouvant engendrer des pertes de revenus significatives pour l'exploitant.

La méthode généralement utilisée dans l'industrie pour déboucher une conduite obturée par des hydrates est la dépressurisation. En effet, la pression étant une des conditions de formation des hydrates, la dépressurisation de la conduite pendant un temps assez long permet, au moins partiellement, la disparition des bouchons. La durée nécessaire à la dissociation diminue d'autant que la dépressurisation est importante. Cependant, une dépressurisation trop importante et trop rapide de l'intérieur de la conduite peut engendrer l'effondrement de la conduite sur elle-même sous l'effet de la pression extérieure, notamment mais pas exclusivement dans le cas des conduites flexibles.

De même, la colonne de liquide à l'intérieur de la colonne montante (« riser » en anglais) impose une pression hydrostatique à l'intérieur de la conduite qui est difficilement contrôlable. Ainsi il est impossible de dépressuriser en dessous d'un certain seuil imposé par cette pression hydrostatique. En pratique, suivant le niveau de dépressurisation à l'intérieur de la conduite et la profondeur à laquelle se trouve ladite conduite, la durée nécessaire à la dissociation peut facilement atteindre plusieurs mois.

De plus, cette méthode impose de collecter du gaz ou du liquide en surface pendant la dissociation des bouchons. Dès lors, pour être réalisé cette opération nécessite l'intervention d'un bateau spécialisé capable de recueillir et de traiter ces fluides aux normes ATEX, ce qui est rare et très coûteux.

Dans certains cas, il est également connu d'introduire dans la conduite un système mécanique destiné à déloger les bouchons. Les opérations de ce type sont fastidieuses à mener et coûteuses. Elles nécessitent généralement un arrêt de la production. De plus, ces opérations ne peuvent être exécutées que sur une longueur relativement faible et typiquement sur la partie verticale de la conduite.

Egalement, dans des cas critiques, aucun moyen conventionnel ne permet de déboucher la conduite, la rendant ainsi inopérante.

Un dispositif alternatif de traitement des bouchons dans une conduite de transport de fluide est décrit par exemple dans US6939082. Dans ce dispositif, un véhicule télécommandé est descendu jusqu'à un point de la conduite auquel se trouve un bouchon d'hydrates. Une chemise est disposée au-dessus de la conduite, en laissant un espace intermédiaire disponible. L'eau présente dans cet espace intermédiaire est chauffée et mise en circulation pour réchauffer la conduite et faire fondre le bouchon.

Un tel dispositif ne donne pas entière satisfaction. Sa mise en place est fastidieuse et nécessite de réaliser une étanchéité locale dans l'espace intermédiaire défini au-dessus de la conduite. La température appliquée à la conduite est difficile à contrôler de manière précise. Par ailleurs, la localisation du bouchon d'hydrates doit être connue a priori, avant de le traiter, ce qui nécessite des investigations longues et coûteuses.

De plus, ce dispositif ne permet qu'un traitement très localisé du bouchon (typiquement 2 m). En l'absence de données relatives à la localisation et à la longueur du bouchon, les temps d'opérations peuvent devenir excessivement long.

L'utilisation d'un tel dispositif comporte également certains risques. En effet, la création de bouchons entraine une irrégularité des pressions le long de la conduite. Ainsi, la pression peut être beaucoup plus élevée d'un côté que de l'autre du bouchon. La chauffe locale accroit ces problèmes d'irrégularité qui peuvent engendrer l'expulsion violente du bouchon et l'endommagement de la conduite, ou encore créer des zones de surpression pouvant dégrader la conduite.

En outre, une fois la zone traitée, si l'on déplace le dispositif pour traiter une nouvelle zone, des hydrates risquent de se reformer dans la zone de traitement initiale pendant le traitement de la zone suivante.

FR 2 788 831 A1 décrit un dispositif d'isolation thermique d'au moins une conduite sous-marine comportant un revêtement isolant entourant celle-ci et une enveloppe de protection.

WO 2010/135772 A1 décrit une méthode de chauffage électrique sélectif d'une conduite sous-marine susceptible d'avoir été obstruée par un bouchon d'hydrate.

WO 90/01584 A1 décrit une couverture amovible destinée à être appliquée en regard d'une conduite de transport de fluide immergée dans une étendue d'eau, selon le préambule de la revendication 1.

Un but de l'invention est de disposer d'un dispositif permettant de suivre et de traiter efficacement, de manière simple et peu coûteuse, des accumulations de matière solide au sein d'une conduite de transport de fluide immergée dans une étendue d'eau.

À cet effet, l'invention a pour objet une couverture selon la revendication 1.

La couverture selon l'invention peut comprendre l'une ou plusieurs des caractéristiques des revendications dépendantes 2 à 12, prise(s) isolément ou suivant toute combinaison techniquement possible.

L'invention a aussi pour objet un ensemble d'intervention en regard d'une conduite de transport de fluide immergée sous une étendue d'eau selon la revendication 13.

L'invention a aussi pour objet un procédé d'interaction avec une conduite de transport de fluide disposée dans une étendue d'eau, selon la revendication 14.

Le procédé selon l'invention peut comprendre l'une ou plusieurs des caractéristiques des revendications 15 et 16, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique, prise à travers une étendue d'eau, d'une installation d'exploitation de fluide, dans laquelle un ensemble de chauffage selon l'invention est mis en oeuvre ;
- la figure 2 est une vue partielle de dessus d'une couverture amovible de chauffage selon l'invention ;
- la figure 3 est une vue prise en coupe suivant le plan transversal III de la figure 1 ;
- la figure 4 est une vue prise en coupe suivant le plan transversal IV de la figure 1 ;
- la figure 5 est une vue prise en coupe suivant le plan transversal V de la figure 1 ;
- la figure 6 est un graphe illustrant la température mesurée par le capteur longitudinal de mesure intégré dans la couverture amovible en fonction de la position longitudinale ;
- la figure 7 est un graphe illustrant la température mesurée par le capteur longitudinal de mesure intégré dans la couverture amovible en regard d'un point donné de la conduite comportant initialement un bouchon, en fonction du temps ;
- la figure 8 est une vue analogue à la figure 5, lorsque la couverture est décentrée par rapport à la conduite ; et
- la figure 9 est une courbe comparant les évolutions de températures mesurées par un capteur situé au centre du corps central de la couverture et par un capteur situé à la périphérie ;
- la figure 10 est une vue analogue à la figure 3 d'une variante de couverture de chauffage selon l'invention ;
- la figure 11 est une vue d'un détail marqué XI sur la figure 10 ;
- la figure 12 est une vue partielle en perspective de l'extrémité d'une pièce destinée à former le corps allongé de la couverture de la figure 10 ;
- la figure 13 est une vue prise en coupe suivant un plan axial, illustrant l'assemblage longitudinal entre deux pièces successives formant le corps allongé de la couverture de la figure 10 ;
- la figure 14 est une vue en coupe du rebord longitudinal d'une première pièce destinée à former le corps allongé ;
- la figure 15 est une vue en coupe du rebord longitudinal complémentaire d'une deuxième pièce destinée à former le corps allongé, par assemblage avec la première pièce.

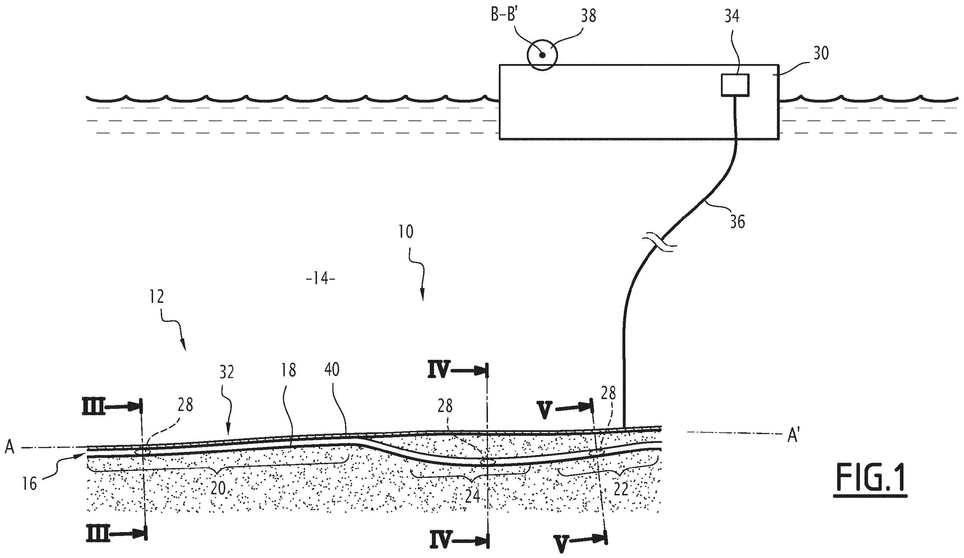

Un premier ensemble d'intervention 10 selon l'invention est illustré schématiquement par la figure 1. L'ensemble 10 est destiné à être utilisé dans une installation 12 d'exploitation de fluide dans une étendue d'eau 14.

L'étendue d'eau 14 est par exemple une mer, un lac ou un océan. La profondeur de l'étendue d'eau 14 au droit de l'installation d'exploitation de fluide 12 est par exemple comprise entre 10 m et 3000 m, voire plus.

L'installation 12 comporte au moins une conduite 16 posée sur le fond 18 de l'étendue d'eau 14 et/ou partiellement ou totalement enterrée dans le fond 18 de l'étendue d'eau 14.

Dans cet exemple, la conduite 16 est une conduite de production (désignée par le terme anglais « flowline ») raccordant un ensemble de collecte de fluide (non représenté) à une colonne montante. En variante, la conduite 16 est une conduite (« pipe » ou ombilical) d'injection de gaz ou d'injection alternée de gaz et d'eau.

La conduite 16 est par exemple une conduite rigide formée d'au moins un tube métallique ou est une conduite flexible comprenant au moins une gaine de pression en matériau thermoplastique et des armures de traction.

La conduite 16 peut ou non comporter une couche isolante thermiquement, cette couche pouvant présenter une épaisseur significative, permettant d'atteindre des niveaux d'isolation inférieurs à 1 W/m².K. À titre d'exemple, la conduite 16 représentée sur la figure 1 comporte un premier tronçon 20 faisant saillie à partir du fond 18 de l'étendue d'eau, un deuxième tronçon 22 enfoui à faible profondeur, par exemple une profondeur inférieure au rayon externe de la conduite 16 et un troisième tronçon 24 enfoui à une plus grande profondeur, supérieure au rayon externe de la conduite 16.

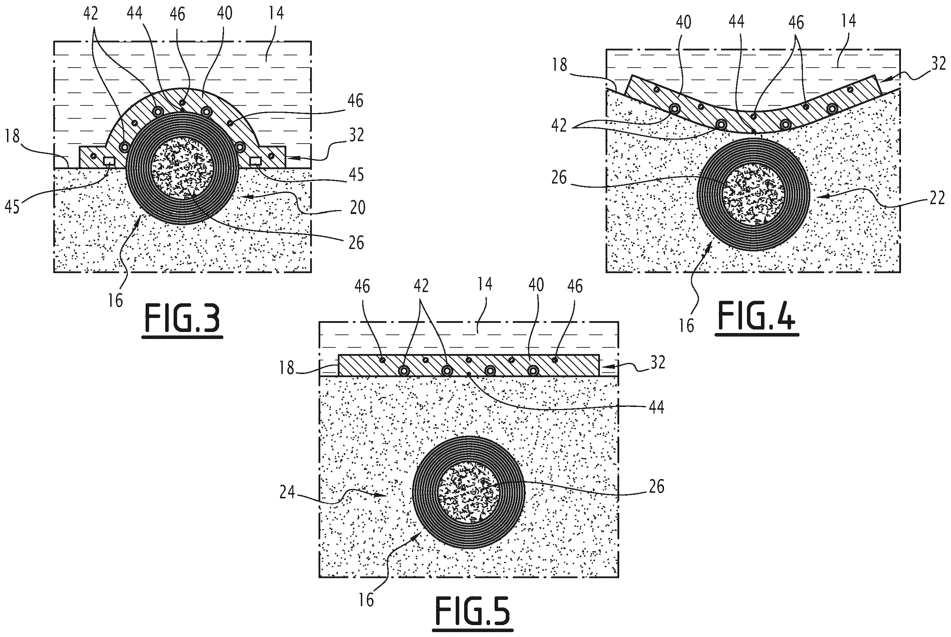

La conduite 16 délimite un passage interne 26 de circulation de fluide, visible sur les figures 3 à 5. Le fluide circulant dans la conduite est par exemple un fluide hydrocarboné comprenant au moins un composé susceptible de se solidifier dans le passage interne 26 à une température comprise entre -40°C et 50°C, notamment entre - 5° C et 25°C.

Le composé susceptible de se solidifier est par exemple un hydrate, une cire, de la glace, et/ou un gel des paraffines et/ou des asphaltènes.

Le composé solidifié est susceptible de s'accumuler sur les parois de la conduite, et dans certains cas critiques, de former des bouchons 28 représentés schématiquement sur la figure 1.

Dans l'exemple représenté sur la figure 1, l'ensemble d'intervention 10 est destiné à être déployé en regard de la conduite 16 pour réchauffer le fluide qu'elle contient, et provoquer la fusion au moins partielle des composés solidifiés.

L'ensemble d'intervention 10 est avantageusement déployé depuis une installation de surface 30 flottante, tel qu'un navire. Toute sorte de navire d'installation peut être utilisé, préférentiellement un navire d'installation conventionnel, ou éventuellement un navire spécifique aux normes ATEX.

Selon l'invention, l'ensemble d'intervention 10 comporte une couverture 32 amovible destinée à être placée en regard de la conduite 16, une unité 34 d'activation, de commande et de suivi du chauffage engendré par la couverture 32, avantageusement portée par l'installation de surface 30, et un lien flexible 36 raccordant l'unité 34 à la couverture 32 à travers l'étendue d'eau 14.

Selon l'invention, l'ensemble d'intervention 10 comporte en outre un dispositif 38 d'enroulement de la couverture 32, porté par l'installation de surface 30.

La couverture amovible 32 est ici destinée à interagir avec la conduite 16 pour la chauffer. Elle est propre à être appliquée de manière réversible sur une surface extérieure de la conduite 16 lorsque la conduite 16 fait saillie à partir du fond 18 de l'étendue d'eau 12 et/ou sur une surface d'appui formée par le fond 18 de l'étendue d'eau 12, en regard de la conduite 16, lorsque la conduite 16 est enterrée.

La couverture amovible 32 comporte un corps allongé 40 flexible, et au moins un élément 42, 44 d'interaction avec la conduite 16 comportant dans cet exemple au moins un élément longitudinal de chauffage 42, et au moins un capteur longitudinal 44 de mesure de la température, l'élément de chauffage 42 et le capteur longitudinal 44 étant portés par le corps 40.

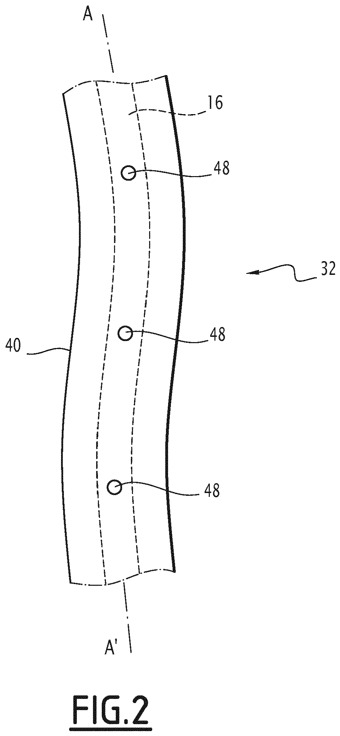

Avantageusement, la couverture amovible 32 comporte des armures internes longitudinales 46, disposées dans le corps 40, pour renforcer sa tenue en traction. La couverture 32 comporte en outre dans cet exemple des organes extérieurs 48 de manipulation, visibles sur la figure 2, propres à être saisis par un véhicule télécommandé sous-marin (« Remotely Operated Vehicle » ou « ROV » en anglais), pour ajuster la position du corps 40 par rapport à la conduite 16.

Le corps allongé 40 est réalisé à partir d'un matériau flexible, déformable de manière réversible pour s'adapter à la forme de la surface sur laquelle il s'applique.

Il présente ici une forme de couche plane avec une section transversale polygonale délimitée vers le bas par une surface inférieure et vers le haut par une surface supérieure opposée.

Le corps allongé 40 comporte avantageusement un élément de lest 45, propre à provoquer la déformation du corps allongé 40 sous l'effet de son poids et à permettre son maintien en position sur la surface sur laquelle il s'applique.

L'élément de lest 45 est également propre à garantir un positionnement stationnaire pendant l'installation, en résistant aux courants marins pendant l'installation.

En effet, l'élément de lest 45 donne un poids fondrier nécessaire à un comportement hydrodynamique acceptable durant la phase d'installation (passage dans la tranche d'eau).

Dans un mode de réalisation, l'élément de lest 45 est réparti de manière dissymétrique, par exemple en lestant beaucoup plus l'avant du corps allongé 40 que l'arrière.

Ainsi, pendant l'installation, la couverture 32 plonge vers le fond de manière verticale, avec sa partie avant relativement immobile dans les courants en raison du lest, et avec sa partie arrière entraînée dans les courants, comme un drapeau au vent. Ceci présente un grand intérêt pour la phase d'approche du sol, durant laquelle il est important que le point d'accroche au sol soit suffisamment lesté pour ne pas être trainé sur le sol sous l'effet du courant, ce qui risquerait de l'endommager mais également qui rendrait complexe son positionnement en regard de la conduite 16.

L'élément de lest 45 est par exemple formé par le sertissage d'une tige métallique positionnée longitudinalement le long du corps allongé 40, ou encore de plaques d'acier, de plomb encapsulé, discontinus dans deux plans pour permettre l'enroulement et stockage sur l'installation de surface 30 et le suivi du profil de terrain, ainsi que du profil de la conduite 16 elle-même. Alternativement, des câbles métalliques, par exemple en acier sont utilisés pour combiner masse ajoutée et reprise des tensions d'installation.

La flexibilité du corps 40 est en outre adaptée pour permettre l'enroulement de la couverture amovible 32 sur le dispositif d'enroulement 38 et son déroulement à partir du dispositif d'enroulement 38, sans déformation plastique significative.

Le corps allongé 40 est par exemple réalisé à partir d'un matériau élastomère de type caoutchouc ou polyuréthane. Son épaisseur peut être comprise entre 50 mm et 100 mm. La couverture peut également prendre la forme d'une structure en nids d'abeille du type de la technologie NIDA. La structure en nids d'abeille comprend de préférence un couche d'alvéoles adjacentes interposées entre deux feuilles continues.

Les alvéoles du nid d'abeille peuvent être remplies d'aérogel et notamment d'aérogel en poudre. Les feuilles peuvent être réalisées en matériau élastomère tel que du caoutchouc.

En variante, le corps allongé est réalisé en mousse syntactique, par exemple à base de polypropylène avec des microsphères de verre. Dans ce cas, et comme le matériau est relativement rigide, la mousse syntactique se présentera sous la forme de pavés juxtaposés.

Les pavés comme les alvéoles des nids d'abeille ont préférentiellement des dimensions maximale inférieures à 30 cm et notamment de l'ordre de 20 cm.

De préférence, le corps allongé 40 est isolant thermiquement. Il présente avantageusement une conductivité thermique inférieure à 0.3 W/m.K, et notamment comprise entre 0,1 W/m.K et 0,3 W/m.K.

Il est ainsi apte à diriger la chaleur produite par chaque élément de chauffage 42 vers la conduite 16.

Selon l'invention, la longueur du corps allongé 40 est supérieure à au moins 10 fois sa largeur, notamment à au moins 100 fois sa largeur.

La longueur du corps allongé 40 est supérieure à 10 m, notamment supérieure à 100 m, avantageusement supérieure à 1 km.

La largeur du corps allongé 40 est inférieure à 5 m, et est notamment inférieure à 2 m.

Selon une caractéristique avantageuse de l'invention, la largeur du corps allongé 40 est supérieure au diamètre de la conduite 16, préférentiellement au moins deux fois supérieure au diamètre de la conduite 16, de manière à faciliter l'installation de la couverture 32, sans avoir à centrer ladite couverture 32 sur la conduite 16. Lorsque la conduite est agencée au-dessus du fond marin, la largeur du corps allongé 40 est avantageusement supérieure au périmètre de la conduite et préférentiellement supérieure à 2 fois le périmètre.

En effet, lorsqu'on opère par plusieurs kilomètres de fond, il devient fastidieux d'ajuster parfaitement la partie médiane de la couverture 32 par rapport à l'axe de la conduite 16. Ainsi, une largeur supérieure permet de conserver la pleine efficacité du alors que la couverture 32 est légèrement décalé de l'axe de la conduite 16.

Lorsque la longueur du corps allongé 40 est très supérieure à sa largeur, la couverture 32 est ainsi apte à chauffer la conduite 16 sur une grande longueur, notamment pour éliminer des accumulations de composés solidifiés, sans avoir nécessairement à localiser précisément la position longitudinale de ces composés avant l'intervention.

Comme indiqué précédemment, le corps allongé 40 est propre à se déformer spontanément pour s'adapter à la surface sur laquelle il s'applique. Dans l'exemple représenté sur la figure 4, le corps 40 présente ainsi une forme de gouttière couvrant la conduite 16 et délimitant un creux de réception de la conduite 16.

Dans l'exemple représenté sur les figures 4 et 5, le corps 40 présente une forme respectivement concave et sensiblement plane, correspondant à la configuration du fond 18 de l'étendue d'eau 14, au droit de la conduite 16.

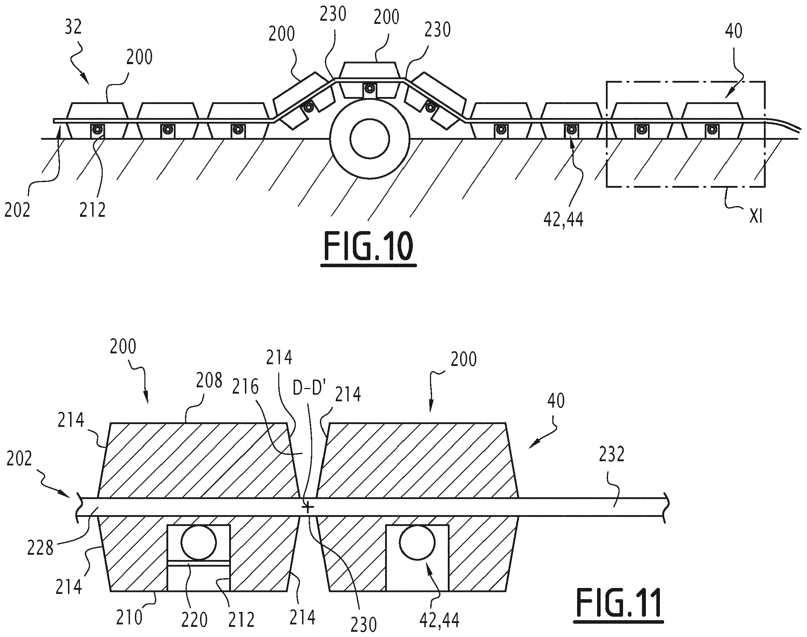

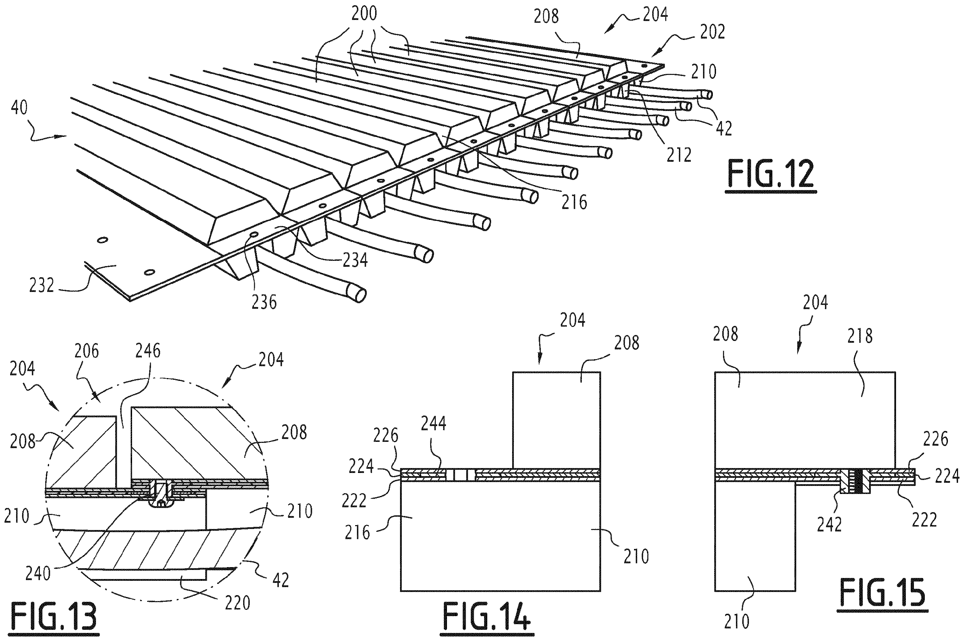

Dans l'exemple illustré sur les figures 3 à 5, la couverture amovible 32 comporte une pluralité d'éléments de chauffage longitudinaux 42, espacés latéralement les uns des autres. Dans cet exemple, la couverture amovible 32 comporte quatre éléments de chauffage 42 parallèles. Dans une variante de réalisation représentée sur la figure 10 et sur la figure 12, la couverture amovible 32 comporte dix éléments de chauffage 42 parallèles. Dans d'autres variantes de réalisation non représentées, la couverture amovible 32 peut comporter plus de dix éléments de chauffage 42 parallèles.

Chaque élément de chauffage 42 s'étend avantageusement sur plus de 90 % de la longueur du corps 40. Une surlongueur est prévue notamment lorsque la couverture 32 est destinée à être bobinée et lorsque les éléments de chauffage 42 ne sont pas des éléments porteurs structuraux. Cette surlongueur est fonction de la distance à l'axe neutre d'enroulement. Cette surlongueur permet d'éviter les surcontraintes de compression et de traction apparaissant entre position enroulée et déroulée.

Dans un mode de réalisation, les éléments de chauffage 42 s'étendent parallèlement à l'axe local A-A' du corps 40. En variante, ils s'étendent globalement parallèlement, les éléments de chauffage 42 présentant des courbures locales en zigzags.

Dans d'autres modes de réalisation, au moins un élément de chauffage 42 parcourt le corps 40 en réalisant des zigzags de la largeur du corps 40. En variante encore, au moins un élément de chauffage 42 est une trame chauffante répartie uniformément sur la surface du corps 40.

Chaque élément de chauffage 42 est ici partiellement noyé dans le corps 40, avec au moins une génératrice affleurant une surface inférieure du corps 40. Dans des variantes de réalisation, les éléments de chauffage 42 sont fixés en saillie sous le corps 40. Pour ne pas être directement en contact avec le sol, ce qui risquerait de dégrader les éléments de chauffage 42, le corps 40 présente des surépaisseurs rigides de part et d'autre des éléments de chauffage 42, pour s'appliquer sur le sol.

Avantageusement, chaque élément de chauffage 42 est formé par une résistance électrique propre à produire de la chaleur par effet Joule, lorsqu'elle est alimentée électriquement par l'unité 34, via le lien 36.

Dans le cas de la couverture chauffante 32, les éléments de chauffage 42 peuvent être en contact direct avec l'eau et la pression ambiante. Ainsi, ils comportent avantageusement un moyen de protection contre la corrosion et la compression, ou sont réalisés dans des matériaux résistant à ces contraintes.

La puissance linéique délivrée par les éléments de chauffage 42 est notamment supérieure à 50 W/m, notamment comprise entre 100 W/m et 300 W/m, plus généralement dans certains cas, comprise entre 100 et 500 W/m.

Le ou chaque capteur de mesure de la température 44 est par exemple formé par un capteur linéaire à fibres optiques de type capteur de température distribuée (« Distributed Température Sensing » ou « DTS »), capteur à fibres de Bragg, ou capteur à grille fine.

Le capteur de mesure de la température 44 s'étend avantageusement sur plus de 90 % de la longueur du corps 40, parallèlement à l'axe local A-A' du corps 40.

Il affleure une surface inférieure du corps 40 pour être placé au contact de la surface chauffée par le corps 40.

Il est avantageusement placé le long de l'axe central A-A' du corps 40, à l'écart transversalement de chaque élément de chauffage 42, de préférence entre deux éléments de chauffage 42 adjacents.

Le capteur 44 est propre à produire un signal représentatif de la température locale de la surface intérieure du corps 40 avec une résolution par exemple de l'ordre de 1 m, le long du corps 40.

Le signal représentatif est recueilli par l'unité 34 pour assurer un suivi de la température locale du corps 40, lors des opérations de chauffage.

Plusieurs capteurs 44 ou parties de capteurs 44 peuvent être agencés dans la largeur du corps 40, afin de déterminer, par l'étude des températures, le centrage du corps 40 de la couverture 32 sur la conduite 16.

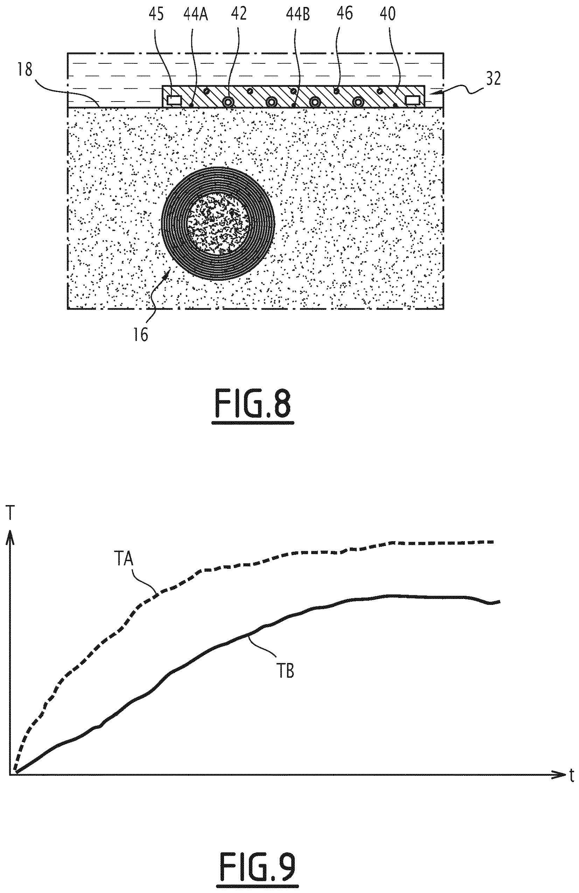

Ceci est illustré par la figure 8 et par la figure 9 qui montre que le capteur 44A situé à la périphérie du corps 40 présente à chaque instant une température TA supérieure à la température TB du capteur 44B situé au centre du corps 40.

La position du corps 40 peut avantageusement être corrigée a posteriori par un véhicule sous-marin télécommandé.

Lorsque le capteur 44 est formé d'une fibre optique, le corps 40 peut recevoir plusieurs fibres optiques longitudinales, ou encore une unique fibre optique qui fait des aller-retours le long du corps 40.

En pratique, l'unité 34 comprend une unité d'analyse (« monitoring unit » en anglais) pour chaque fibre optique et le lien 36 comprend un canal d'ombilical dédié par fibre optique.

Ainsi, l'emploi d'une unique fibre optique faisant des aller-retours ne requiert qu'une unité d'analyse et qu'un canal d'ombilical, ce qui diminue le coût. A l'inverse, plusieurs unités d'analyses permettent une meilleure discrétisation sur les grandes longueurs.

Les éléments d'armure 46 s'étendent longitudinalement dans le corps 40. Ils sont par exemple formés par des fils métalliques et/ou composites. Chaque élément d'armure 46 est noyé dans le corps 40, en étant disposé à l'écart des éléments de chauffage 42.

La présence des éléments d'armure 46 rigidifie le corps 40 le long de l'axe A-A', tout en maintenant sa déformabilité suivant d'autres directions.

Les éléments de manipulation 48 font saillie à partir d'une surface supérieure du corps 40. Ils sont propres à être saisis par un outil d'un véhicule sous-marin télécommandé pour ajuster la position locale du corps 40.

Les éléments de manipulation 48 sont par exemple des poignées, des cordes, etc.

Ils sont répartis longitudinalement le long du corps 40.

L'unité d'actionnement, de commande et de suivi 34 est raccordée à la couverture amovible 32 pour activer les éléments de chauffage 42 et piloter leur chauffage et pour suivre la mesure de température réalisée par le capteur 44. L'unité 34 est ainsi propre à suivre la température locale du corps 40 le long de la conduite 16, et à commander cette température sur la base des mesures réalisées par le capteur 44.

Le lien 36 est par exemple formé par un flexible tel qu'un ombilical. Il comporte au moins une ligne électrique d'alimentation de chaque élément de chauffage 42, et une ligne de transfert d'informations, raccordée au capteur de mesure de la température 44.

Le dispositif d'enroulement 38 comporte un tambour ou un panier monté rotatif sur l'installation de surface 30 autour d'un axe B-B' d'enroulement. Il est propre à permettre l'enroulement du corps 40 avec un rayon minimal de courbure supérieur à 2 m et par exemple compris entre 2 m et 4 m.

Un premier procédé selon l'invention d'intervention en regard d'une conduite 16 sous-marine va maintenant être décrit.

Initialement, la couverture amovible 32 est chargée sur le dispositif d'enroulement 38 de l'installation de surface 30, en étant enroulée autour de l'axe B-B' du dispositif 38.

L'installation de surface 30 est ensuite amenée au voisinage de la conduite 16. Une extrémité libre de la couverture amovible 32 est déroulée et est immergée dans l'étendue d'eau, par exemple à l'aide d'un véhicule télécommandé, pour être posée sur la conduite 16, lorsque celle-ci est accessible, ou sur un point situé verticalement en regard de la conduite 16, lorsque celle-ci est enterrée.

La couverture amovible 32 est ensuite déroulée progressivement et posée longitudinalement suivant le tracé de la conduite 16.

Comme indiqué précédemment, la couverture 32 plonge vers le fond de manière sensiblement verticale, avec au moins sa partie avant relativement immobile dans les courants en raison de l'élément de lest 45. Le poids global de la couverture 32 lui confère une stabilité et une résistance aux courants marins pendant sa descente verticale.

La grande flexibilité du corps 40 permet à la couverture 32 de suivre précisément le tracé de la conduite 16. Le corps 40 étant déformable sous l'effet de son propre poids, il épouse la forme de la surface sur laquelle il est posé, cette surface pouvant être la conduite 16 elle-même dans le tronçon 20 visible sur la figure 3, ou le fond 18 de l'étendue d'eau 14 lorsque la conduite est enterrée à faible profondeur, comme sur la figure 4 pour le tronçon 22, ou à une profondeur plus importante, comme sur la figure 5 pour le tronçon 24.

La grande longueur du corps 40 de la couverture 32 ne nécessite pas de localiser précisément où se trouvent d'éventuelles accumulations de solide ou des bouchons 28 dans la conduite 16, puisque la conduite 16 est traitée de manière globale sur toute la longueur de la couverture 32.

Un lien 36 est par ailleurs mis en place à travers l'étendue d'eau 18 entre un point de la couverture 32 et l'unité 34 située sur l'installation de surface 30.

Le lien 36 raccorde électriquement l'unité 34 à chaque élément de chauffage 42. Il raccorde également l'unité 34 avec le capteur 44 de mesure de la température.

Dans le cas où plusieurs capteurs 44 sont présents, le lien 36 comporte de préférence plusieurs canaux et donc raccorde plusieurs capteurs 44 à une ou plusieurs unités centrales.

Puis, l'unité 34 active chaque élément de chauffage 42. Le corps 40 étant réalisé au moins partiellement en matériau isolant, la chaleur produite par chaque élément de chauffage 42 est dirigée principalement à travers la surface inférieure du corps 40, vers la conduite 16, par contact direct avec la conduite 16, ou par transmission de chaleur à travers le fond 18 de l'étendue d'eau 14.

La chaleur produite par les éléments de chauffage 42 chauffe le contenu de la conduite 16 dans le passage interne 26, permettant la dissolution au moins partielle des composés solides formés dans le passage 26, et le dégagement des bouchons 28 éventuels, sur toute la longueur du corps 40.

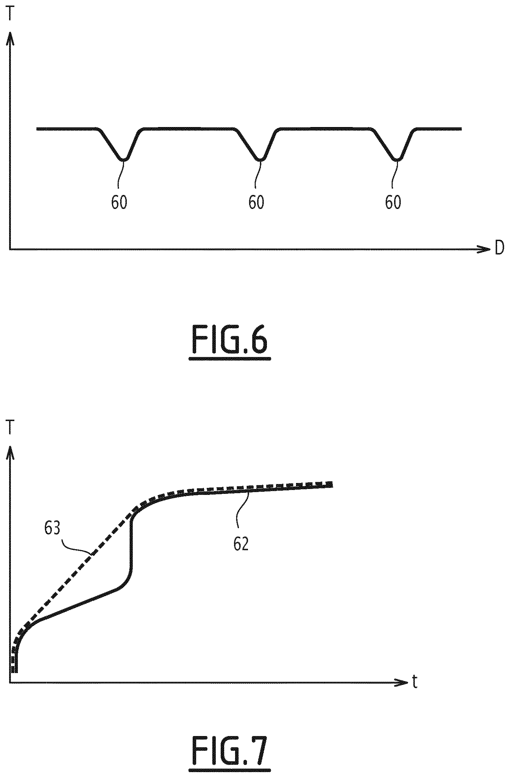

Lors du chauffage, l'unité 34 suit l'évolution de la température locale du corps 40 le long de la conduite 16. Comme illustré par la figure 6, les zones 60 présentant localement une plus faible température sont généralement associées à une accumulation de solide dans la conduite 16, et parfois à des bouchons 28.

L'unité 34 suit également l'évolution locale de la température du corps 40 en fonction du temps, pour chaque zone 60 d'accumulation de solide, afin de déterminer une stabilisation de cette température 62 représentative de la disparition de l'accumulation de solide, comme illustré sur la figure 7, qui compare l'évolution 62 en présence d'un bouchon à l'évolution 63 en l'absence de bouchon, pour un écoulement essentiellement liquide.

Une fois les tronçons 20 à 24 de la conduite 16 traités, la couverture 32 peut être déplacée vers d'autres tronçons de la conduite 16, par exemple en la tirant à l'aide d'au moins un véhicule sous-marin télécommandé, ou en la remontant sur l'installation de surface 30 et en l'enroulant sur le dispositif 38.

La couverture 32 selon l'invention est donc particulièrement simple à mettre en place et à déplacer dans l'étendue d'eau 14. La flexibilité de son corps 40, éventuellement associée à la présence d'éléments de lest 45, adapte sensiblement la conformation du corps 40 à la configuration de la conduite 16 qu'elle soit accessible ou enterrée.

A minima, l'entrée et la sortie d'eau par convection naturelle ou par courant est évitée pendant la chauffe. Une enceinte « hermétique » à la circulation d'eau est avantageusement créée, avec éventuellement une ou plusieurs poches d'eau enfermée dedans. L'efficacité du chauffage est naturellement meilleure en l'absence de poche d'eau.

La grande longueur du corps 40 de la couverture 32 assure un traitement global d'une grande longueur de la conduite 16, sans qu'il soit nécessaire de détecter précisément où se trouvent les éventuelles accumulations de composés solides, et notamment les bouchons 28.

Une isolation thermique efficace est fournie par le corps 40 pour diriger la chaleur produite par les éléments de chauffage 42 vers la conduite 16, en minimisant les pertes.

La couverture 32 permet donc de traiter très efficacement et rapidement d'éventuelles accumulations de solide dans la conduite 16, sans nécessiter nécessairement d'interruption de production.

La présence d'un capteur longitudinal de mesure de la température 44 permet la localisation d'éventuelles accumulations de solide, et la vérification de leur disparition.

De plus, la couverture 32, éventuellement munie d'éléments d'armures internes 46 pour assurer sa rigidité longitudinale, est enroulable sur un dispositif d'enroulement 38, facilitant son stockage et sa manipulation sur une installation de surface 30.

Dans une variante, plusieurs couvertures 32 tel que décrites plus haut sont montées en série les unes avec les autres, pour former un ensemble de chauffage 10 de longueur plus importante.

Dans une autre variante, les éléments de chauffage 42 ne sont pas nécessairement des résistances électriques, mais sont formés par des conduits de circulation d'un fluide caloporteur chaud.

En variante, la couverture 32 est dépourvue d'éléments de chauffage 42 ou comporte des éléments de chauffage 42 inactifs. Elle comporte uniquement un ou plusieurs éléments d'interaction avec la conduite 16 formés par des capteurs de mesure de la température 44, pour faire du suivi passif de la conduite 16 en cours de production, sans chauffage.

Dans une autre variante, la couverture 32 est installée de manière permanente sur des lignes en place qui requièrent une isolation ou un chauffage actif suite à une évolution du profil de production. Dans ce cas, le contrôle et l'injection de puissance sont effectués depuis une plateforme de production.

Une variante de couverture amovible 32 selon l'invention est illustrée par les figures 10 à 15. Dans cette variante, le corps allongé 40 comporte une pluralité de bandes longitudinales adjacentes 200 articulées longitudinalement les unes aux autres et une charnière d'articulation entre les bandes 200, formée par une feuille commune 202.

Dans cet exemple, comme illustré par la figure 12, le corps allongé 40 comporte une pluralité de pièces longitudinales successives 204, assemblées longitudinalement les unes aux autres, et des éléments 206 d'assemblage des pièces successives 204, visibles sur la figure 13.

Les bandes longitudinales 200 s'étendent ici sur toute la longueur du corps allongé 40. Chaque bande longitudinale 200 est articulée à une bande longitudinale adjacente 200 le long d'un bord longitudinal de la bande 200.

Dans cet exemple, chaque bande longitudinale 200 comporte un segment supérieur 208, et un segment inférieur 210, assemblés de part et d'autre de la feuille 202.

Au moins une bande longitudinale 200, ici chaque bande longitudinale 200, définit une rainure inférieure 212 destinée à loger au moins un élément longitudinal 42, 44 d'interaction avec la conduite 16.

Chaque segment 208, 210 présente une forme prismatique pleine. Dans l'exemple représenté sur la figure 11, la section transversale de chaque segment 208, 210 est constante sur sensiblement toute la longueur du segment 208, 210. Cette section est par exemple en forme de quadrilatère, ici en forme de trapèze.

Chaque segment 208, 210 présente des faces latérales 214 inclinées l'une vers l'autre et par rapport à la verticale d'un angle avantageusement compris entre 15° et 45°, de préférence entre 20° et 30°.

Ainsi, chaque bande longitudinale 200 est déplaçable en rotation autour d'un axe longitudinal D-D' par l'intermédiaire de la charnière, grâce à l'espace 216 ménagé entre les faces latérales 214 inclinées en regard de deux segments 208 ou 210 adjacents.

Les segments 208, 210 sont réalisés en matériau isolant, par exemple dans les matériaux polymères cités plus haut pour la fabrication du corps 40. De préférence, le matériau est résistant aux ultraviolets ou comporte un revêtement résistant aux ultraviolets.

Le matériau polymère des segments 208, 210 est choisi avec une flexibilité adéquate pour pouvoir être enroulé sur un fût ou un tambour. De préférence, le matériau polymère formant chaque segment 208, 210 est apte à être déformé élastiquement pour un allongement d'au moins 5 %.

Les segments 208, 210 sont fixés sur la feuille 202 par collage, thermosoudure, ou/et de préférence, par vulcanisation.

De préférence, chaque segment 208, 210 est fixé sur la feuille 202 sur toute la surface appliquée sur la feuille 202, afin de garantir une liaison mécanique constante sur toute la longueur et pour éviter les zones de décollement pouvant favoriser une circulation d'eau.

Comme décrit sur les figures 14 et 15, pour chaque pièce successive 204, chaque segment inférieur 210 fait saillie axialement au-delà du segment supérieur 208 à une première extrémité de la pièce 204 pour définir un rebord d'appui 216 destiné à l'appui d'une pièce adjacente 224.

Pour chaque pièce successive 204, chaque segment supérieur 208 fait saillie axialement au-delà du segment inférieur 210 à une deuxième extrémité opposée à la première extrémité, pour définir un rebord de coopération 218 avec le rebord d'appui 216 d'une pièce 204 adjacente.

Dans cet exemple, la rainure 212 est ménagée longitudinalement dans chaque segment inférieur 210. Elle débouche vers le bas.

L'élément d'interaction 42, 44 est logé dans la rainure 212. Il est fixé sous la bande 220 au fond de la rainure 212 par des organes de maintien 220, tel que des bagues et/ou des étriers espacés d'une distance prédéterminée les uns les autres pour contrôler le glissement de l'élément 42, 44 par rapport au corps allongé 40.

De préférence, l'élément d'interaction 42, 44 est disposé au niveau de la fibre neutre d'enroulement du corps allongé 40, au fond de la rainure 212. Ceci limite la tension s'appliquant sur l'élément d'interaction 42, 44 lorsque le corps allongé 40 est enroulé sur un fût ou sur un tambour.

Les éléments de lest 45 sont moulés et/ou sont extrudés dans un segment 208, 210 d'une bande 220 ou sont directement fixés dessus par exemple par vissage au moyen d'une vis autoperforante.

La feuille 202 est commune à toutes les bandes longitudinales 200 d'une même pièce 204.

La feuille 202 est plus souple que chaque segment 208, 210 pour être déformée en torsion lors de la rotation relative de chaque bande 200 par rapport à une bande adjacente 200.

La feuille 202 présente une conductivité thermique préférentiellement inférieure à 0,1 W/(m.K). Ceci permet de conférer une isolation thermique dans les interstices entre les bandes adjacentes 200.

La feuille 202 présente une épaisseur supérieure à 5 mm, de préférence supérieure à 6 mm. L'épaisseur de la feuille 202 est optimisée pour conserver une certaine souplesse, tout en permettant une isolation thermique satisfaisante.

Dans l'exemple représenté sur les figures 14 et 15, la feuille 202 comporte une pluralité de couches assemblées les unes sur les autres, par exemple par calandrage. Il comporte ainsi au moins une couche intérieure 224 en matériau polymère, par exemple en élastomère, notamment en polychloroprène ou encore en polyamide, au moins une couche intermédiaire textile, (non représentée), par exemple plusieurs couches textiles agencées à 45° l'une par rapport à l'autre, pour assurer une reprise des efforts dans une pluralité de directions, une couche intermédiaire 224 en polymère et/ou une couche supérieure 226 en polymère, par exemple en polyéthylène chlorosulfoné ou encore en éthylène-propylène-diène monomère.

La couche supérieure 226 et la couche inférieure 224 sont de préférence résistantes aux intempéries, à l'abrasion, et à la corrosion. La couche supérieure 226 est en outre de préférence résistante aux ultraviolets.

En référence à la figure 11, la feuille 202 définit ainsi une pluralité de régions de support 228 des bandes longitudinales 200, et entre chaque paire de régions de support 228, des charnières 230 longitudinales situées entre les bandes longitudinales 200.

La feuille 202 définit en outre, latéralement de part et d'autre de chaque pièce 204, une jupe latérale 232, et aux extrémités axiales de chaque pièce 204, une bande 234 de support des éléments d'assemblage 206, visible sur la figure 12.

La jupe latérale 232 fait saillie latéralement par rapport aux bandes longitudinales 200. Elle est propre à reposer sur le fond marin et à isoler longitudinalement l'espace situé sous le corps allongé 40 du reste de l'environnement marin.

La bande de support 234 s'appuie sur les rebords d'appui 216 de chaque segment inférieur 210 à une première extrémité de la pièce 204. Elle est fixée sous les rebords de coopération 218 à une deuxième extrémité de la pièce 204.

La bande de support 234 définit une pluralité d'orifices de passage 236 des éléments d'assemblage 206.

Les éléments d'assemblage 206 comprennent au moins un organe d'accouplement 240, visible sur la figure 13, inséré dans l'orifice de passage 236 et destiné à raccorder entre elles les bandes de support 234 de deux pièces successives 204 adjacentes. Dans cet exemple, les éléments d'assemblage 206 comportent en outre un organe de réception 242 de l'organe d'accouplement 240, solidaire d'une première bande de support 234, et un organe de renfort 244, solidaire d'une deuxième bande de support 234.

Dans cet exemple, l'organe d'accouplement 240 est un boulon. En variante, il est formé par un rivet ou par un autre organe traversant les bandes 234.

L'organe de réception 242 comporte une douille disposée à travers l'orifice 236 de la bande de support 234, et une collerette de maintien de la douille 242, interposée entre la couche inférieure 222 et la couche supérieure 226 de la feuille 202 au niveau de la bande de support 234.

L'organe de renfort 244 est par exemple formé par un oeillet entourant l'orifice 236 de la bande de support 234 opposée à celle présentant l'organe de réception 242. L'oeillet est interposé entre la couche inférieure 222 et la couche supérieure 226 de la feuille 202.

Pour fixer les pièces successives 204, chaque organe d'accouplement 240 est introduit dans un organe de réception 242 à travers l'organe de maintien 244. Les bandes de support 234 sont alors assemblées l'une sur l'autre.

Le rebord d'appui 216 porte alors le rebord 218 de coopération.

Les segments inférieurs 210 sont alors placés au contact de l'autre l'un de l'autre, alors qu'un jeu longitudinal 246 subsiste entre les segments supérieurs 208. Ce jeu 246 favorise l'enroulement du corps allongé 40 sur un fût ou sur un tambour, en maintenant les segments supérieurs 208 dirigés vers le fût ou le tambour.

Pour fabriquer le corps allongé 40, chaque pièce 204 est tout abord réalisée. À cet effet, les segments supérieurs 208 et les segments inférieurs 210 de chaque bande 200 sont fixés sur la feuille commune 202 parallèlement les uns aux autres. Les segments supérieurs 208 et les segments inférieurs 210 sont décalés axialement pour former respectivement le rebord inférieur d'appui 216 et le rebord supérieur de coopération 218 aux extrémités opposées de la pièce 204.

Puis, les pièces successives 204 sont assemblées les unes avec les autres en série. Les organes d'accouplement 240 sont introduits entre les bandes du support 234 placées au contact de l'une de l'autre et coopèrent avec les organes de réception 242 pour réaliser l'assemblage.

Ceci maintient le rebord supérieur 218 de coopération au contact du rebord inférieur 216 d'appui. Le rebord supérieur de coopération 218 couvre les éléments d'assemblage 206, évitant ainsi la création de ponts thermiques entre l'espace situé sous le corps allongé 40 et l'espace situé au-dessus du corps allongé 40.

En outre, l'agencement en quinconce des segments supérieurs 208 et des segments inférieurs 210 limite la circulation d'eau au niveau de la jonction. Avantageusement, un joint est introduit entre les bandes de support 234 pour améliorer encore l'étanchéité de l'assemblage.

Ceci étant fait, le corps allongé 40 est enroulé sur un fût un tambour. Lors de cet enroulement, les éléments 42, 44 d'interaction avec la conduite 16 sont introduits dans les rainures 212 et les organes de maintien 220 sont mis en place.

La mise en place des éléments 42, 44 lors de l'enroulement limite la tension appliquée sur ces éléments 42, 44, ce qui réduit le risque de dégradation sous l'effet de la tension, notamment suite à plusieurs enroulements/déroulements.

La mise en place de la couverture 32 ainsi formée est par ailleurs analogue à celle décrite précédemment. Elle s'effectue par exemple au moyen d'un tensionneur et/ou d'un treuil de traction.

La présence de charnières longitudinales 230 entre les bandes 200 permet à la couverture 32 de se déformer par rotation autour d'axes longitudinaux pour épouser au plus près la forme de la conduite 16, quelle que soit sa taille, comme illustré par la figure 10.

Dans une variante, le corps allongé 40 est formé d'un seul tenant, et non d'un assemblage de plusieurs pièces 204.

Dans une autre variante, les bandes longitudinales 200 sont discontinues axialement. Les segments 208, 210 présentent alors une forme de « tablette de chocolat ».

## Revendications

1. Couverture (32) amovible destinée à être appliquée en regard d'une conduite (16) de transport de fluide immergée dans une étendue d'eau (14), comportant :
- un corps allongé (40), propre à s'appliquer en regard d'une surface extérieure de la conduite (16) ;
- au moins un élément longitudinal (42, 44) d'interaction avec la conduite (16), porté par le corps allongé (40) ;
le corps allongé (40) étant déformable de manière réversible sous l'effet de son propre poids,
**caractérisée en ce que** le corps allongé (40) présente une longueur supérieure à 10 m, le corps allongé (40) étant propre à être enroulé de manière réversible sur un dispositif (38) de stockage rotatif.

2. Couverture (32) selon la revendication 1, dans laquelle le corps allongé (40) présente une longueur supérieure à 100 m, avantageusement supérieure à 1 km.

3. Couverture (32) selon l'une quelconque des revendications 1 ou 2, dans laquelle au moins un élément longitudinal d'interaction avec la conduite est un capteur longitudinal de mesure (44) de la température porté par le corps allongé (40), le capteur longitudinal de mesure (44) de la température s'étendant avantageusement sur au moins 90 % de la longueur du corps allongé (40).

4. Couverture (32) selon l'une quelconque des revendications précédentes, comportant au moins un élément de lest (45) porté par le corps allongé (40).

5. Couverture (32) selon l'une quelconque des revendications précédentes, dans laquelle le corps allongé (40) est propre à être enroulé de manière réversible sur un dispositif (38) de stockage rotatif.

6. Couverture (32) selon l'une quelconque des revendications précédentes, comportant au moins un élément (48) de manipulation propre à être saisi par un véhicule télécommandé sous-marin.

7. Couverture (32) selon l'une quelconque des revendications précédentes, dans laquelle le corps allongé (40) comporte un matériau isolant thermiquement.

8. Couverture (32) selon l'une quelconque des revendications précédentes, dans laquelle au moins un élément longitudinal d'interaction avec la conduite (16) est un élément longitudinal de chauffage (42) comportant avantageusement une résistance électrique de chauffage.

9. Couverture (32) selon l'une quelconque des revendications précédentes, dans laquelle le corps allongé (40) comprend une pluralité de bandes adjacentes (200) articulées longitudinalement l'une par rapport à l'autre, au moins un élément longitudinal (42 ; 44) d'interaction avec la conduite étant porté par une bande (200), au moins une des bandes (200) délimitant avantageusement une rainure inférieure recevant l'élément longitudinal d'interaction (42 ; 44) avec la conduite.

10. Couverture (32) selon la revendication 9, dans laquelle chaque bande (200) comporte un segment inférieur (210), un segment supérieur (208), le corps allongé (40) comprenant une charnière (230) disposée entre le segment inférieur (210) et le segment supérieur (208), chaque segment inférieur (210) et chaque segment supérieur (208) présentant avantageusement des faces latérales (214) inclinées l'une vers l'autre.

11. Couverture (32) selon la revendication 10, dans laquelle la charnière (230) est formée sur une feuille intermédiaire (202) commune interposée entre une pluralité de segments inférieurs (210) et une pluralité de segments supérieurs (208), la feuille intermédiaire (202) comportant avantageusement une jupe (232) en saillie latérale par rapport aux bandes (200).

12. Couverture (32) selon l'une quelconque des revendications 9 à 11, dans laquelle le corps allongé (40) est formé d'une pluralité de pièces (204) assemblées longitudinalement, chaque pièce (204) définissant un rebord longitudinal d'appui (216) d'une autre pièce (204) et un rebord longitudinal de coopération (218) avec le rebord d'appui (216) d'une autre pièce (204), la couverture (32) comprenant des éléments (206) d'assemblage des pièces successives (204) entre elles.

13. Ensemble (10) d'intervention en regard d'une conduite (16) de transport de fluide immergée sous une étendue d'eau (14), comportant :
- au moins une couverture (32) selon l'une quelconque des revendications précédentes ;
- une unité (34) d'activation, de commande et de suivi du ou de chaque élément longitudinal (42, 44) d'interaction avec la conduite, raccordée à la ou à chaque couverture (32),
- un dispositif de stockage (38) rotatif, la couverture (32) étant propre à être enroulée et déroulée de manière réversible sur le dispositif de stockage (38) rotatif.

14. Procédé d'interaction avec une conduite (16) de transport de fluide disposée dans une étendue d'eau (14), comportant les étapes suivantes :
- fourniture d'une couverture (32) selon l'une quelconque des revendications 1 à 12 ;
- placement de la couverture (32) dans l'étendue d'eau (14) pour la disposer en regard d'une surface extérieure de la conduite (16) de transport de fluide ;
- activation du ou de chaque élément longitudinal (42) d'interaction avec la conduite, pour interagir avec la conduite (16), notamment pour chauffer la conduite ou pour mesurer une température de la conduite.

15. Procédé selon la revendication 14, dans lequel l'étape de placement comporte l'application de la couverture (32) sur la surface extérieure de la conduite (16) de transport de fluide, et la déformation spontanée de la couverture (32) pour s'adapter à la forme de la surface extérieure de la conduite (16) de transport de fluide.

16. Procédé selon la revendication 15, dans lequel la conduite (16) est au moins partiellement enterrée dans le fond de l'étendue d'eau (14), l'étape de placement comportant l'application de la couverture (32) sur une surface d'appui située à l'écart et en regard de la surface extérieure de la conduite (16) de transport de fluide, avantageusement sur le fond de l'étendue d'eau (14), et la déformation spontanée de la couverture (32) pour s'adapter à la forme de la surface d'appui.

## Patentansprüche

1. Abnehmbare Abdeckung (32) zur Anordnung gegenüber einer in einem Gewässer (14) untergetauchten Fluidtransportleitung (16), aufweisend:
- einen länglichen Körper (40), der imstande ist, sich gegenüber einer Außenfläche der Leitung (16) anzulegen;
- mindestens ein Längselement (42, 44) zur Interaktion mit der Leitung (16), das von dem länglichen Körper (40) getragen wird;
wobei der längliche Körper (40) unter der Wirkung seines Eigengewichts reversibel verformbar ist,
**dadurch gekennzeichnet, dass** der längliche Körper (40) eine Länge von über 10 m aufweist, wobei der längliche Körper (40) imstande ist, reversibel auf einer drehbaren Speichervorrichtung (38) aufgewickelt zu sein.

2. Abdeckung (32) nach Anspruch 1, wobei der längliche Körper (40) eine Länge von über 100 m, in vorteilhafter Weise über 1 km, aufweist.

3. Abdeckung (32) nach einem der Ansprüche 1 oder 2, wobei mindestens ein längliches Element zur Interaktion mit der Leitung ein länglicher Temperaturmesssensor (44) ist, der von dem länglichen Körper (40) getragen wird, wobei sich der längliche Temperaturmesssensor (44) in vorteilhafter Weise über mindestens 90 % der Länge des länglichen Körpers (40) erstreckt.

4. Abdeckung (32) nach einem der vorhergehenden Ansprüche, aufweisend mindestens ein Ballastelement (45), das von dem länglichen Körper (40) getragen wird.

5. Abdeckung (32) nach einem der vorhergehenden Ansprüche, wobei der längliche Körper (40) imstande ist, reversibel auf einer drehbaren Speichervorrichtung (38) aufgewickelt zu sein.

6. Abdeckung (32) nach einem der vorhergehenden Ansprüche, aufweisend mindestens ein Betätigungselement (48), das imstande ist, von einem ferngesteuerten Unterwasserfahrzeug ergriffen zu werden.

7. Abdeckung (32) nach einem der vorhergehenden Ansprüche, wobei der längliche Körper (40) ein wärmeisolierendes Material aufweist.

8. Abdeckung (32) nach einem der vorhergehenden Ansprüche, wobei mindestens ein längliches Element zur Interaktion mit der Leitung (16) ein längliches Heizelement (42) ist, das in vorteilhafter Weise einen elektrischen Heizwiderstand aufweist.

9. Abdeckung (32) nach einem der vorhergehenden Ansprüche, wobei der längliche Körper (40) eine Vielzahl benachbarter Streifen (200) umfasst, die längs zueinander gelenkig verbunden sind, wobei mindestens ein längliches Element (42; 44) zur Interaktion mit der Leitung von einem Streifen (200) getragen wird, wobei mindestens einer der Streifen (200) in vorteilhafter Weise eine untere Nut begrenzt, die das längliches Element (42; 44) zur Interaktion mit der Leitung aufnimmt.

10. Abdeckung (32) nach Anspruch 9, wobei jeder Streifen (200) ein unteres Segment (210), ein oberes Segment (208) aufweist, wobei der längliche Körper (40) ein Scharnier (230) umfasst, das zwischen dem unteren Segment (210) und dem oberen Segment (208) angeordnet ist, wobei jedes untere Segment (210) und jedes obere Segment (208) in vorteilhafter Weise Seitenflächen (214) aufweist, die zueinander geneigt sind.

11. Abdeckung (32) nach Anspruch 10, wobei das Scharnier (230) auf einer gemeinsamen Zwischenfolie (202) ausgebildet ist, die zwischen einer Vielzahl unterer Segmente (210) und einer Vielzahl oberer Segmente (208) angeordnet ist, wobei die Zwischenfolie (202) in vorteilhafter Weise eine Schürze (232) aufweist, die seitlich von den Streifen (200) vorsteht.

12. Abdeckung (32) nach einem der Ansprüche 9 bis 11, wobei der längliche Körper (40) aus einer Vielzahl längs zusammengesetzter Teile (204) gebildet ist, wobei jedes Teil (204) einen Längsrand zur Auflage (216) eines anderen Teils (204) und einen Längsrand zum Zusammenwirken (218) mit dem Auflagerand (216) eines anderen Teils (204) definiert, wobei die Abdeckung (32) Elemente (206) zum Verbinden aufeinanderfolgender Teile (204) miteinander umfasst.

13. Interventionsanordnung (10) gegenüber einer in einem Gewässer (14) untergetauchten Fluidtransportleitung (16), aufweisend:
- mindestens eine Abdeckung (32) nach einem der vorhergehenden Ansprüche;
- eine Einheit (34) zur Aktivierung, Steuerung und Nachverfolgung des oder jedes Längselements (42, 44) zur Interaktion mit der Leitung, die mit der oder jeder Abdeckung (32) verbunden ist,
- eine drehbare Speichervorrichtung (38), wobei die Abdeckung (32) imstande ist, reversibel auf der drehbaren Speichervorrichtung (38) auf- und abgewickelt zu werden.

14. Verfahren zur Interaktion mit einer Fluidtransportleitung (16), die in einem Gewässer (14) angeordnet ist, das die folgenden Schritte aufweist:
- Bereitstellen einer Abdeckung (32) nach einem der Ansprüche 1 bis 12;
- Platzieren der Abdeckung (32) in dem Gewässer (14), um sie gegenüber einer Außenfläche der Fluidtransportleitung (16) anzuordnen;
- Aktivieren des oder jedes Längselements (42) zur Interaktion mit der Leitung, um mit der Leitung (16) zu interagieren, insbesondere um die Leitung zu erwärmen oder um eine Temperatur der Leitung zu messen.

15. Verfahren nach Anspruch 14, wobei der Schritt des Platzierens das Anbringen der Abdeckung (32) an der Außenfläche der Fluidtransportleitung (16) und die spontane Verformung der Abdeckung (32) umfasst, um sich an die Form der Außenfläche der Fluidtransportleitung (16) anzupassen.

16. Verfahren nach Anspruch 15, wobei die Leitung (16) zumindest teilweise im Boden des Gewässers (14) vergraben ist, wobei der Schritt des Platzierens das Anbringen der Abdeckung (32) auf einer Auflagefläche, die von der Außenfläche der Fluidtransportleitung (16) entfernt und dieser zugewandt ist, aufweist, in vorteilhafter Weise auf dem Boden des Gewässers (14), und die spontane Verformung der Abdeckung (32), um sich an die Form der Auflagefläche anzupassen.

## Claims

1. A removable cover (32) intended to be applied to be facing a fluid transport pipe (16) submerged in a body of water (14), comprising:
- an elongate body (40), that is capable of being applied facing an outer surface of the pipe (16);
- at least one longitudinal interaction element (42, 44) for interacting with the pipe (16), supported by the elongate body (40);
the elongate body (40) being reversibly deformable under the effect of its own weight,
**characterized in that** the elongate body (40) has a length greater than 10 m, the elongate body (40) being adapted so as to be wound in a reversible manner over a rotating storage device (38).

2. - A cover (32) according to claim 1, wherein the elongate body (40) has a length that is greater than 100 m, advantageously greater than 1 km.

3. - A cover (32) according to any one of claim 1 or claim 2, wherein at least one longitudinal interaction element for interacting with the pipe is a longitudinal temperature measurement sensor (44) for measuring the temperature, that is borne by the elongate body (40), the longitudinal temperature measuring sensor (44) advantageously extending over at least 90% of the length of the elongate body (40).

4. - A cover (32) according to any one of the preceding claims, comprising at least one ballast element (45) borne by the elongate body (40).

5. - A cover (32) according to any one of the preceding claims, wherein the elongate body (40) is adapted so as to be wound in a reversible manner over a rotating storage device (38).

6. - A cover (32) according to any one of the preceding claims, including at least one handling element (48) that is adapted so as to be gripped by a remotely operated underwater vehicle.

7. - A cover (32) according to any one of the preceding claims, wherein the elongate body (40) comprises a thermally insulating material.

8. - A cover (32) according to any one of the preceding claims, wherein at least one longitudinal interaction element for interacting with the pipe (16) is a longitudinal heating element (42) advantageously comprising an electrical heating resistor.

9. - A cover (32) according to any one of the preceding claims, wherein the elongate body (40) comprises a plurality of adjacent strips (200) longitudinally hinged to each other, at least one longitudinal interaction element (42; 44) for interacting with the pipe being borne by a strip (200), at least one of the strips (200) advantageously delimiting a lower groove intended for accommodating the longitudinal interaction element (42; 44) for interacting with the pipe.

10. - A cover (32) according to claim 9, wherein each strip (200) includes a lower segment (210), an upper segment (208), the elongate body (40) comprising a hinge joint (230) disposed between the lower segment (210) and the upper segment (208), each lower segment (210) and each upper segment (208) advantageously having lateral surfaces (214) that are inclined towards one another.

11. - A cover (32) according to claim 10, wherein the hinge joint (230) is formed on a common intermediate sheet (202) interposed between a plurality of lower segments (210) and a plurality of upper segments (208), the intermediate sheet (202) advantageously comprising a skirt (232) projecting laterally relative to the strips (200).

12. - A cover (32) according to any one of claims 9 to 11, wherein the elongate body (40) is formed of a plurality of pieces (204) that are assembled to be longitudinally joined together, each piece (204) defining a longitudinal support ridge (216) for supporting another piece (204) and a longitudinal cooperation ridge (218) for cooperating with the support ridge (216) of another piece (204), the cover (32) comprising assembling elements (206) for assembling the successive pieces (204) there between.

13. - An operating assembly (10) disposed to be facing a fluid transporting pipe (16) submerged under a body of water (14), that comprises:
- at least one cover (32) according to any one of the preceding claims;
- an activation, control and monitoring unit (34) for activating, controlling and monitoring the or each longitudinal interaction element (42, 44) for interacting with the pipe, connected to the or each cover (32),
- a rotating storage device (38), the cover (32) being adapted so as to be wound and unwound in a reversible manner over the rotating storage device (38).

14. - An interaction method for interacting with a fluid transport pipe (16) disposed in a body of water (14), that includes the following steps:
- provision of a cover (32) according to any one of claims 1 to 12;
- placement of the cover (32) in the body of water (14) in order for it to be disposed to be facing an outer surface of the fluid transport pipe (16);
- activation of the or each longitudinal interaction element (42) for interacting with the pipe, so as to interact with the pipe (16), in particular for heating the pipe or for measuring a temperature of the pipe.

15. - A method according to claim 14, wherein the step of placement of the cover includes the application of the cover (32) on to the outer surface of the fluid transport pipe (16), and the spontaneous deformation of the cover (32) so as to fittingly adapt to the form and shape of the outer surface of the fluid transport pipe (16).

16. - A method according to claim 15, wherein the pipe (16) is at least partially buried in the bed of the body of water (14), the step of placement comprising of the application of the cover (32) on to a bearing surface situated so as to be at a distance away from and facing the outer surface of the fluid transport pipe (16), advantageously on the bed of the body of water (14), and the spontaneous deformation of the cover (32) so as to fittingly adapt to the form and shape of the bearing surface.
